Europäisches Patentamt

European Patent Office

Office européen des brevets

(19)

(11) Publication number: **0 375 390**
**A1**

(12) **EUROPEAN PATENT APPLICATION**

(21) Application number: **89313338.9**

(22) Date of filing: **20.12.89**

(51) Int. Cl.⁵: **C08L 77/00, C08L 51/04**

(30) Priority: **22.12.88 US 288734**

(43) Date of publication of application:
**27.06.90 Bulletin 90/26**

(84) Designated Contracting States:
**AT BE CH DE ES FR GB GR IT LI LU NL SE**

(71) Applicant: **FERRO CORPORATION**
**100 Lakeside Avenue**
**Cleveland Ohio 44114(US)**

(72) Inventor: **Baghaii, Parviz**
**6211 Elmwood Drive**
**Independent Ohio 44131(US)**
Inventor: **Scheibelhoffer, Anthony Stephen**
**2986 Wilbanks Drive**
**Norton Ohio 44203(US)**

(74) Representative: **Thomas, Roger Tamlyn et al**
**D. Young & Co. 10 Staple Inn**
**London WC1V 7RD(GB)**

(54) **Toughened polyamide compositions having improved properties.**

(57) Toughened polyamide compositions are produced by melt blending a polyamide component and a partially crosslinked elastomeric modifier component containing reactive functionalities. Generally a multiple phase composition is formed wherein the polyamide constitutes a continuous phase and the elastomeric modifier component constitutes a discontinuous phase having a particle size of at least 1.3 or 1.5 microns and preferably at least 5.0 microns. The discontinuous elastomeric modifier component is made by adding reactive functionalities to an existing elastomer polymer and partially or semi-crosslinking the same in the presence of free radical initiators such that at least 10 percent gel exists. The amount of the elastomeric modifier component is generally from about 1 to about 85 percent by weight. The polyamide compositions have a wide range of improved properties such as good low temperature (e.g., minus 40°C) impact resistance and good high temperature heat deflection (e.g., 65°C).

EP 0 375 390 A1

## TOUGHENED POLYAMIDE COMPOSITIONS HAVING IMPROVED PROPERTIES

### FIELD OF THE INVENTION

This invention generally relates to thermoplastic polyamide compositions blended with a partially crosslinked elastomeric modifier component containing reactive functionalities to form a multiphase blend. More specifically, polyamide compositions of the present invention demonstrate improved notched Izod, i.e., ductility, both at room temperature and at low temperatures (minus 40° C), improved high temperature heat deflection values, improved solvent resistance, etc.

### BACKGROUND

Unmodified thermoplastic polyamides, particularly nylons, are generally regarded as "tough" resins. These polymers have good elongation, high energy at break, high tensile impact strength and high energy absorption. Polyamides, however, are deficient with respect to resistance to crack propagation, as reflected in notch sensitivity, brittle breaks and occasional catastrophic failure of molded or extruded parts. The tendency of polyamides to break in a brittle manner limits their utility.

Much effort has been given to improving this deficiency of polyamides in general. For example, U.S. Patent No. 4,174,358 discloses a toughened multiphase thermoplastic polyamide composition. This patent discloses admixing at least one thermoplastic polymer with a polyamide. The thermoplastic polymer has a particle size of 3 microns or less and a tensile modulus of no greater than 20,000 psi. The patent does not disclose improved low temperature toughness as measured by low temperature notched Izod testing, does not disclose improved high temperature heat deflection, and the like.

The prior art has evidenced this effort with improving impact strength of polyamides by admixing a wide variety of additives with polyamides. Some improvement in toughness has been obtained by these various additives, however, none has demonstrated significant improvement in low temperature toughness along with high impact strength. For example, British Patent No. 998,439 discloses a thermoplastic composition comprising a mixture of 50 to 99 percent linear polyamide and a 1 to 50 percent of an olefin copolymer, the olefin copolymer containing from 0.1 to 10 mole percent of acid groups. A wide variety of olefin copolymers are disclosed, however, none are required to be partially crosslinked.

British Patent No. 1,279,836 discloses synthetic hair derived from polyamides and highly crosslinked copolymers which are derived from a monoethylenically unsaturated monomer and a di- or tri- ethylenically unsaturated crosslinking agent. The particle size of these crosslinked copolymers are preferably 1 micron or less.

U.S. Patent No. 4,321,337 discloses coextruding an ionomer resin with a polyamide.

U.S. Patent Nos. 3,373,222 and 3,373,223 disclose admixing a polyolefin and a carboxylated polyethylene with a linear polyamide. There is no disclosure relating to the particle size of the polymers added, nor to the additive polymers being partially crosslinked.

U.S. Patent No. 3,845,163 discloses blends of 60 to 85 percent by weight polyamide and an acid containing olefin polymer in which the acid is derived from an alpha, beta ethylenically unsaturated carboxylic acid and in which at least 10 percent of the acid groups have been neutralized with metal ions to form ionomers. This patent, however, is directed to improving weld toughness which is not specifically related to blend toughness.

U.S. Patent No. 4,148,846 discloses a combination of an amine reactive moiety containing polymer grafted to a polycarbonamide. This patent is directed to improving the extrudability, blow moldability and injection moldability of polyamides. While the patent does disclose improved impact strength, there is no disclosure relating to low temperature toughness. This patent discloses achieving its objectives by employing a modifier that comprises a first phase elastomeric polymer combined with a final rigid thermoplastic polymeric phase containing amine reactive moieties which are grafted to the polyamide.

U.S. Patent No. 3,676,400 discloses polyamides having improved impact strength by blending 10 to 50 weight percent of an olefin polymer containing 1 to 10 mole percent of groups from an unsaturated carboxylic acid with 50 to 90 weight percent of a polyamide having a molecular weight of at least 10,000. This patent requires employing a polyamide having a high content of amine end groups.

U.S. Patent Nos. 4,314,929 and 4,105,709 disclose various filled polyamide compositions which also include impact modifiers.

U.S. Patent No. 4,167,505 discloses an impact modifier for polyamides which is produced by first forming an impact modifier concentrate of an acrylic impact modifier combined with a high molecular weight aliphatic polycarbonamide followed by mixing 10 to 30 parts by weight of the concentrate with 70 to 90 parts by weight of a low molecular weight aliphatic polycarbonamide.

None of the foregoing disclosures are concerned with, nor demonstrate, improved low temperature toughness for polyamides, improved high temperature heat deflection, and the like, for polyamides.

## SUMMARY OF THE INVENTION

Various aspects of the invention are hereinafter set forth in the independent claims. There will now be described preferred features of the invention, the term "present invention" not necessarily implying that essential features are being referred to.

According to the present invention, a multiphase thermoplastic polyamide composition is provided having improved properties over a wide range of temperatures. The impact modifiers of the present invention are easily prepared and are inexpensive.

According to one embodiment of the present invention, an elastomeric modified component, i.e., a partially crosslinked elastomer containing reactive functionalities which are reactive with a polyamide is melt blended with a polyamide, i.e., a nylon. The partially crosslinked elastomer exhibits a crosslinking density (gel content) of at least 10 percent and has a particle size in the range of 1.3 microns to about 50 microns.

It was surprising to discover that, in particular, with the elastomeric modifier component which has a relatively high gel content and larger particle size as compared, e.g., to the impact modifiers of U.S. Patent No. 4,174,358, that highly toughened nylon alloy compositions having high heat deflection temperature, higher notched Izod at room temperature and at minus 40° C, and having greater solvent resistance than presently available modified polyamides, were obtained.

Further, in accordance with the present invention, toughened thermoplastic compositions are provided which are useful for preparing various molded articles such as films, oriented fibers, tubing, laminates, wire coatings and the like.

These and other aspects of the present invention will become clear to those skilled in the art upon the reading and understanding of the specification.

## DETAILED DESCRIPTION OF THE INVENTION

The polyamide/functionalized elastomer multiphase compositions according to the present invention surprisingly exhibit improved properties over a wide range of temperatures and are prepared by melt blending a linear polyamide with an elastomeric modifier which generally is a partially crosslinked elastomer having a gel content of at least 10 percent and having reactive functionalities which are reactive with the polyamide. The polyamide constitutes a continuous phase and the elastomer constitutes a discontinuous phase in the composition. The multiphase composition will be termed a "blend" herein, wherein the term is used to mean a physical amalgamation of two or more somewhat discrete components which exist in a multiphase system having phase interaction at some level which could include intermolecular forces such as Van der Waal's forces or hydrogen bonding or could rise to the level of intermolecular bonding including ionic or covalent bonding.

The polyamide matrix resin of the toughened alloy compositions according to the present invention is known in the art and includes semi-crystalline and amorphous resins which are also referred to as nylon resins. Suitable polyamides include those described in, for example, U.S. Patent Nos. 2,512,606 and 3,393,210. The weight average molecular weight is generally from about 5,000 to about 50,000 and preferably from about 10,000 to about 30,000. A suitable polyamide resin may be produced by condensation of approximately equimolar amounts of a saturated dicarboxylic acid containing from 4 to 12 carbon atoms with a diamine, in which the diamine contains from 4 to 14 carbon atoms. Excess diamine can be employed to provide an excess of amine end groups over carboxyl end groups in the polyamide. Examples of such polyamides include polyhexamethylene adipamide (66 nylon), polyhexamethylene azelaamide (69 nylon), polyhexamethylene sebacamide (610 nylon), and polyhexamethylene dodecanoamide (612 nylon). Polyamides produced by ring opening of lactams include polycaprolactam, polylauric lactam, poly-11-

3

aminoundecanoic acid, bis(paraaminocyclohexyl) methane dodecanoamide and the like. It is also possible to use in this invention polyamides prepared by the copolymerization of two of the above monomers or terpolymerization of the above monomers or their components, e.g., for example, an adipic, isophthalic acid hexamethylene diamine copolymer. Preferably the polyamides are linear with a melting point in excess of 200°C. According to the present invention, the amount of the polyamide is generally from 15 percent to about 99 percent by weight, desirably from about 45 to about 95 percent by weight, and preferably from about 50 percent to about 85 percent by weight based upon the total weight of the elastomeric modifier containing reactive functionalities and the polyamide.

Generally, the blend composition, according to the present invention, is made by reacting and partially crosslinking a pre-existing elastomer polymer with a functional monomer to form an elastomeric modifier component. Subsequently, the partially crosslinked elastomeric modifier component is added and mixed generally under melt conditions with the polyamide to form the multiphase system of the present invention. The amount of the elastomeric modifier is from about 1 to about 85 percent, desirably from about 5 percent to about 55 percent, and preferably from about 15 percent to about 50 percent by weight based upon the total weight of said elastomeric modifier and said polyamide.

The pre-existing elastomer polymer used to form the impact modifiers are generally rubbers, that is either have a low glass transition temperature "Tg", and/or a high elongation. Typically, rubbers are classified as polymers which have a glass transition temperature of minus 40°C or less. Another classification is that the elongation is generally 100 percent or greater at room temperature. Such rubbers are well known to the art as well as to the literature. A group of rubbers which can be utilized are those made from diene monomers having from 4 to 12 carbon atoms such as butadiene, isoprene, hexadiene, and the like, as well as interpolymers thereof such as butadiene-isoprene, butadiene-hexadiene, and the like. Another group of rubbers are those made from conjugated dienes having from 4 to 12 carbon atoms with vinyl substituted monomers having from 8 to 12 carbon atoms such as styrene, alphamethylstyrene, and the like. A specific example is styrene-butadiene rubber. Yet another group of rubber compounds which can be utilized according to the present invention are rubbery type block copolymers made from the above-noted conjugated dienes having from 4 to 12 carbon atoms and the vinyl substituted aromatics having from 8 to 12 carbon atoms, with a specific example being a random copolymer or a multiblock of styrene-butadiene or styrene-isoprene wherein the butadiene or isoprene has been partially or fully hydrogenated. Such rubbers are commercially available from Shell Chemical under the trademark Kraton. The various nitrile rubbers constitute another group and are generally composed of an acrylonitrile or an alkyl derivative thereof with one or more conjugated dienes and optionally with one or more monomers of an acrylic acid, an ester thereof, or a dicarboxylic acid. Various butyl rubbers, that is rubbers made from isoprene and isobutylene monomers, can also be utilized. Various ethylene-propylene copolymers can be utilized wherein the copolymer generally contains from about 60 to about 70 percent by weight of ethylene therein. Still another group of rubbers are the various terpolymers composed of ethylene-propylene and small amounts of diene monomer units such as ethyl norbornene, dicyclopentadiene, hexadiene, and the like. The amount of the diene monomer is generally from about one half to about 10 percent by weight. Various halogenated elastomers constitute yet another group of rubbers according to the present invention such as polychloroprene, that is polymers composed of 2-chloro-1,3-butadiene. Preferably the elastomer is composed of ethylene-propylene-diene monomer units (EPDM); random copolymer or multiblock SBR; polybutadiene; polyisoprene; and nitrile rubber. Most preferably the elastomer is an EPDM elastomer.

The existing elastomer polymer is reacted with various compounds containing reactive functionalities or reactive sites. Such reactive compounds can either react with the elastomer and form an adduct thereof or actually be involved in partially crosslinking the elastomers. The amount of the reactive functional containing compound is from about 0.01 to about 0.5 mole fraction and preferably from about 0.01 to about 0.1 mole fraction of the total reactive sites on the polymer. Such compounds include alpha, beta unsaturated dicarboxylic acids or salts thereof having from 3 to 8 carbon atoms and preferably 3 or 4 carbon atoms, an unsaturated carboxylic acid or salt thereof having from 3 to 8 carbon atoms and preferably 3 or 4 carbon atoms, an anhydride or a salt thereof having from 3 to 8 carbon atoms, a monoester or salt thereof having from 3 to 8 carbon atoms and preferably 3 or 4 carbon atoms, a sulphonic acid or salt thereof, an unsaturated epoxy having from 4 to 11 carbon atoms and preferably from 4 to 6 carbon atoms, and the like, as swell as combinations thereof. Preferably, the reactive functionality compound is an alpha, beta unsaturated dicarboxylic acid or a salt thereof, or an anhydride or a salt thereof. The salts are generally alkaline metals or transitional metals and preferably sodium, zinc, or aluminum. Preferred reactive functional compounds include maleic acid, fumaric acid, acrylic acid, methacrylic acid, maleic anhydride, and glycidyl methacrylate.

The reaction of the elastomer with the reactive functionality compounds generally takes place in the presence of free radical initiators. Suitable free radical initiators are generally an alkanoyl, aroyl, alkaroyl, or an aralkanoyl diperoxide, a monohydroperoxide, or an azo compound, a persulfate, a peroxy ester, a percarbonate, or any other suitable free radical-type initiator. Examples of specific initiators include benzoyl peroxide, lauryl peroxide, diacetyl peroxide, cumene hydroperoxides, methyl ethyl ketone peroxide, diisopropylbenzene hydroperoxide, 2,4-dichlorobenzoyl peroxide, naphthoyl peroxide, t-butyl perbenzoate, di-t-butyl perphthalate, isopropyl percarbonate, acetyl cyclohexane sulfonyl peroxide, disecondary butyl peroxydicarbonate, t-butyl peroxyneodecanoate, dinormal propyl peroxydicarbonate, azo-bisisobutylonitrile, alpha, alpha'-azodiisobutyrate, 2,2'-azo-bis-(2,4-dimethyl valeronitrile), and the like. The initiators should be added in an amount of from about 0.001 to about 0.5 percent by weight, and preferably from about 0.01 to about 0.3 percent by weight based on the total weight of the elastomer.

The free radical initiators serve to promote a cross linking reaction of the functionalized elastomers and/or crosslinking of two elastomers having a functional compound as a bridge. An effective amount of initiator is utilized so that the gel content of the elastomer is generally from about 10 to about 90 percent, and preferably from about 20 to about 40 percent. By the term "gel", it is meant that various insoluble segments exist; in other words, the elastomers are partially or semi-crosslinked.

The partially crosslinked elastomeric modifier of the present invention is generally obtained by 1 of 3 types of chemical reactions. The first reaction is that an adduct of the elastomer is initially formed with the reactive functional compound and the elastomer is subsequently partially crosslinked. The second reaction is that the reactive functionality compound actually bridges the elastomers and hence crosslinks the same. In other words, the functionality serves as a crosslinking agent and is incorporated into crosslinking bridge. The third situation is that the various elastomers form crosslinks with each other and subsequently the reactive functionality is added thereto as an adduct. Of course, it is to be understood that depending upon various reaction conditions, various types of reactive functionality compounds utilized, various types of free radical initiators utilized, and the like, any one of the three above reactions can predominate or two or even all three of the above, or other types of reactions can occur. Generally, the free radical initiators and the reactive functional compounds can be added in any sequence.

The reactive functional compounds are reacted with the elastomer polymer in the presence of free radical initiator under heat and shear to obtain intimate mixing. Suitable reaction temperatures are from about 200° F to about 600° F and desirably from about 400° F to about 550° F. It is desirable that the mixing apply some shear as from about 500 sec$^{-1}$ to about 2,000 sec$^{-1}$, and preferably from about 500 sec$^{-1}$ to about 1,500 sec$^{-1}$. Examples of suitable mixing equipment include twin screw extruders, Banbury mixers, Buss kneader, FCM, and the like. The amount of the reactive functional compounds which are reacted with the elastomer in one manner or another, e.g., as an adduct or as a crosslinking bridge, is generally from about 20 percent to about 90 percent and preferably from about 40 percent to about 85 percent based upon the total number of such reactive functional compounds.

The resultant partially crosslinked elastomer containing reactive functionalities can then be melt blended, coextruded and the like with the particular polyamide to give a polyamide alloy composition exhibiting high heat deflection temperature, improved notched Izod at room temperature and particularly at low temperatures, i.e., at minus 40° C, and improved solvent resistance. Melt mixing occurs generally under a sufficient or an effective amount of shear so that the two components generally form a uniform or blended mixture. Examples of suitable melt mixing equipment include extruders such as a single or a twin screw extruder, a Brabender, a Banbury, and the like. A multi-screw extruder such as a Werner Pfleiderer extruder having generally 2 to 5 kneading blocks and at least one reverse pitch to generate high shear, can be utilized. Alternatively, the blends may be made by coprecipitation from solution, blending or by dry mixing together of the components followed by melt fabrication of the dry mixture by extrusion. Melt blending generally occurs at temperatures of from about 5° F to about 200° F above the melting point of the polyamide, and generally at tempera tures from about 50° F to about 100° F above the melting point of the polyamide. The melt blended mixture, which is opaque at temperatures less than 30° F above the melting point denoting a two-phase system, is generally cooled in a water bath, cut and vacuum dried.

After melt blending, the polyamide generally exists as a continuous phase and the elastomeric modifier exists as a discontinuous rubber phase. The amount of the elastomeric modifier which is reacted with the polyamide is generally dependent upon the number of primary amine chain ends available and hence tends to be proportional thereto. Generally, from about 10 to about 60 percent and preferably from about 10 to about 40 percent of the available functional groups are reacted with the primary amine end groups of the polyamide. The size of the discontinuous elastomeric modified component or rubber phase is generally large, that is a weight average size of from about 1.3 or 1.5 microns to about 50 microns, desirably from about 3.5 to about 35 microns, and preferably from about 5 to about 25 microns in size. It is further noted that the melt blending of the elastomeric modified component with the polyamide component produces a discontinuous rubber phase which may actually contain small polyamide particles therein. In other words, part of the polyamide may actually be dispersed as very small particles within the discontinuous rubber phase although, as a whole, the polyamide constitutes a continuous phase. In effect, a three-phase system can exist. The very small polyamide particles which are actually contained within the dispersed rubber phase generally have a size of less than 2.0 microns and are generally less than 1.3 or 1.0 microns. Such an aspect is important inasmuch as stiff nylon particles are enclosed within rubber particles that provide better heat deflection temperatures but do not adversely affect the notched Izod impact properties of the polyamide compositions of the present invention.

The notched Izod test further characterizes the composition with regard to its ductility. Expressed in ft-lbs/inch of notch, notched Izod values in the dry as molded condition for preferred polymers are presented herein for test conducted at room temperature (approximately 23°C) and at minus 40°C. It has been found generally that dry as molded notched Izod ASTM D-256-86 values of at least 2 ft-lbs/inch, desirably at least 4 ft-lbs/inch, and most preferably at least 9 ft-lbs/inch at 23°C. The notched Izod impact values at minus 40°C are very good and are generally at least 1.0 ft-lbs/inch, desirably at least 3.0 ft-lbs/inch, and preferably at least 9 ft-lbs/inch.

An unexpected result of the polyamide compositions of the present invention containing an elastomeric modifier component therein is that very good high heat deflection values have been obtained. That is, heat deflection values according to ASTM D-648-82 at 264 psi of from about 50°C to about 75°C and preferably from about 60°C to about 70°C have been obtained. An advantage of the present invention is that good high heat deflection values are obtained and yet good low temperature toughness properties such as notched Izod are also obtained. Such an advantage was unexpected since there is usually a trade-off of properties in that good high temperature properties adversely effect good low temperature properties.

The melt flow of the thermoplastic composition is in the range of 0.01 to 200 grams per minute by ASTM D-1228 at 280°C, and 2160 g. load, preferably 0.1 to 150 grams per minute. Inasmuch as the elastomeric modifier component is partially crosslinked or gelled, the melt flow thereof is very low, that is generally from about 0.001 to about 0.08 and preferably from about 0.01 to about 0.05 grams per minute according to the ASTM test noted in the preceding sentence. The high gel content of the elastomer component of the present invention is generally believed to be responsible for the large particle sizes of the elastomeric modifier component as well as for the inclusion of the very small polyamide particles within the discontinuous phase rubber particles.

Through the melt mixing, shear blending, process of the present invention, the elastomeric component containing the reactive functionalities therein is actually reacted with the nylon and adhered thereto. The adherence may be a hydrogen bond, a covalent bond, an ionic bond, or the like.

It is apparent from the above description that a variety of polymers are effective in toughening polyamides and a substantially large number of combinations are useful. It is therefore not surprising that the limits of effectiveness of some components of the compositions depend on the other components. For example, the lower limit of concentration of an effective adhering site, e.g., maleic anhydride, will probably be lower than a less effective adhering site, e.g., methyacrylic acid. Similarly, the balance between amine and carboxyl end groups in a matrix will influence the comparative effectiveness of different adherent sites of the reactive polymer. The relationship between notched Izod and concentration of polymer is applicable only for polymers with an optimum combination of adherence, modulus, and particle size.

The compositions of the invention may be modified by one or more conventional additives such as stabilizers and inhibitors of oxidative, thermal, and ultraviolet light degradation; lubricants and mold release agents, colorants including dyes and pigments, fibrous and particulate fillers and reinforcements, nucleating agents, plasticizers, etc.

The stabilizers can be incorporated into the composition at any stage in the preparation of the thermoplastic composition. Preferably the stabilizers are included early to preclude the initiation of degradation before the composition can be protected. Such stabilizers must be compatible with the composition.

The oxidative and thermal stabilizers useful in the materials of the present invention include those used in condensation polymers generally. They include, for example, up to 1 percent by weight, based on the weight of the polyamide of Group I metal halides, e.g., sodium, potassium, lithium with cuprous halides, e.g., chloride, bromide, iodide, hindered phenols, hydroquinones, and varieties of substituted members of those groups and combinations thereof.

The ultraviolet light stabilizers, e.g., up to 2.0 percent, based on the weight of polyamide, can also be those used in condensation polymers generally. Examples of ultraviolet light stabilizers include various substituted resorcinols, salicylates, benzotriazoles, benzophenones, and the like.

Suitable lubricants and mold release agents, e.g., up to 1.0 percent, based on the weight of the composition, are stearic acid, stearic alcohol, stear-amides; organic dyes such as nigrosine, etc.; pigments, e.g., titanium dioxide, cadmium sulfide, cadmium sulfide selenite, phthalocyanines, ultramarine blue, carbon black, etc.; up to 50 percent, based on the weight of the composition, of fibrous and particulate fillers and reinforcement, e.g., organic and inorganic fillers and filler such as carbon fibers, glass fibers, polyaramid fibers, boron fibers, Wollastonite fibers, amorphous silica, asbestos, calcium silicate, aluminum silicate, magnesium carbonate, kaolin, chalk, powdered quartz, mica, feldspar, etc.; nucleating agents, e.g., talc, calcium fluoride, sodium phenyl phosphinate, alumina, and finely divided polytetrafluoroethylene, etc.; plasticizers, up to about 5 percent, based on the weight of the composition, e.g., dioctyl phthalate, dibenzyl phthalate, butyl benzyl phthalate, hydrocarbon oils, N-normal butyl benzene sulfonamide, ortho and para toluene ethyl sulfonamide, etc. The colorants (dyes and pigments) can be present in an amount of up to about 5.0 percent by weight, based on the weight of the composition.

It may be desirable to form a concentrate of the toughened thermoplastic composition. This is accomplished by initially melt blending high amounts of the impact modifier to achieve a high concentration of the same in the polyamide composition. At a later point in time, additional polyamide can be melt blended therewith to yield a reduced concentration of the impact modifier.

It may be useful to increase the molecular weight of the toughened thermoplastic compositions during the preparation of the composition. By way of illustration, an admixture of low molecular weight polyamide, e.g., 5,000 to 15,000, and at least one modifying polymer is prepared in a plasticating device as described above and the molecular weight is increased either in the melt or at an elevated temperature below the melting point (solid phase) of the polyamide. By further way of illustration, after melt blending the composition is either (1) held in the melt at a temperature about 10° to 40°C above the melting point at a pressure of about 1 to 25 mm Hg absolute for up to one hour, or (2) in the solid phase, after cutting, quenching and drying, at an eleva ted temperature at least 15°C below the melt temperature of the polyamide in an inert gas stream for at least two hours. Beaton U.S. Patent No. 3,821,171 describes solid phase polymerization.

The toughened thermoplastic compositions can be made into a wide range of useful articles by conventional molding methods employed in the fabrication of thermoplastic articles, i.e., as molded parts, extruded shapes, e.g., tubing, films, sheets, fibers and oriented fibers, laminates and wire coating. "Molding" means forming an article by deforming the blend in the heated plastic state.

The compositions of this invention are characterized by an outstanding combination of properties, such as superior toughness properties. The unusually high toughness provides greater ductility, less sensitivity to scratches and molded in notches, and vastly reduced susceptibility to catastrophic failure when compared with previously known compositions in molded parts. Injection molded parts often are of varying thicknesses and may have scratches, molded-in notches of varying radii, and molded in stresses. In addition, orientation effects may cause varied ductility throughout a molded part. The maintenance of high uniform values of notched Izod toughness throughout such molded parts characterizes the improved compositions resistance to brittle breaks. The compositions are of sufficient toughness that the effect of minor changes in processing conditions will not cause significant variation in toughness from lot-to-lot quantities of composition. Another superior property is the heat deflection values noted above. Thus, the polyamide compositions of the present invention have unique properties in that they possess excellent toughness at low temperatures and yet high heat deflection temperatures and thus can be utilized in a variety of applications as noted hereinabove.

The following examples are provided to illustrate various polyamide alloy compositions prepared or derived in accordance with the present invention with such polymeric materials as described above. Again, it is emphasized that these examples are provided for illustrative purposes only and are not to serve as a limitation on the scope of the invention where such scope is set out solely in the claims.

## EXAMPLES

The following examples illustrate the invention wherein the percentages are by weight unless indicated.

The toughened polyamide compositions are prepared as follows:

The polyamide matrix and polymer(s) in dry form are mixed after weighing in the proper proportions by tumbling in a polyethylene bag. The mixture is then blended in a twin screw extruder. Molded samples of the polyamide compositions of the present invention are tested using the following test procedures in the dry-as-molded state:

Notched Izod Toughness at each end of the test specimen: ASTM D-256-56

7

Heat Distortion Tensile Strength: ASTM D-638-58T Elongation: ASTM D-638-58T

Flexural Modulus: ASTM D-79-58T

Tensile Modulus of the Matrices: ASTM D-638-58T (dry)

Tensile Modulus of the Polymers: ASTM D-882 (50% RH)

Melt Flow: ASTM D-1238-73 Condition G (except where noted)

Particle Size: Electron micrographs of microtomed or fractured surfaces.

Heat Deflection Temperature: ASTM D-648-82 (264 psi)

The following examples illustrate the first step of the process to make the semi-crosslinked impact modifier adduct and the second step in which this impact modifier is added to the polyamide to make the blend compositions of the present invention.

Determination of the extent of cross linking reaction was made by solvent extraction of the resulting semi-crosslinked elastomeric adducts. The uncrosslinked portion therefore was dissolved using this method of solvent extraction for a long period of time and the crosslinked and uncrosslinked portions were separated. Then the residue of extraction (e.g., crosslinked portion) was extracted to remove unreacted functional reactive monomer and/or homopolymer of the reactive monomer. The resulted residual (e.g., crosslinked portion) was studied by FTIR to determine the extent of reaction between the reactive monomer and the elastomeric crosslinked polymer.

The weight percentage of the insoluble portion will be called gel content hereinafter.

## EXAMPLE 1

About 4.0 weight percent powdered maleic anhydride and 0.2 weight percent of 20 percent dicumyl peroxide concentrate (Polyvel PCL-20) were metered down stream in a closed system (for safety) to the 95.8 weight percent molten EPDM (Vistalon-3708). The resulting material was stranded, cooled and pelletized. The processing temperature was kept in the range of 140° to 200°C. The processing temperature should not exceed 260°C because of possible decomposition of EPDM. The twin screw extruder was a 34 mm Leistritz with six barrel section with L/D of about 24.5. The maleic anhydride and peroxide were added at zone 3 and at zone 5 the vacuum devolatilization was performed. The gel content was about 38 percent and residence time was about 4 minutes. This material is identified as impact modifier A hereinafter.

## EXAMPLE 2

The same composition, processing equipment, and processing condition were used as above but in this Example all of the components were fed to the extruder at the feed section and only zone 5 was completely available for vacuum venting. The feed section was completely separated from the laboratory environment by use of aluminum foil. The gel content was about 90 percent. This material is identified as impact modifier B hereinafter.

## EXAMPLE 3

The same as above except only peroxide was added downstream at zone 3. The gel content was about 60 percent. This material will be identified as impact modifier C hereinafter.

## EXAMPLE 4

In this example, the concentration of maleic anhydride was varied but the amount of peroxide was kept constant. Please note Table I for compositional variation. In this case, only peroxide was added at zone 3 of the twin screw extruder. The processing condition was kept the same as Example 3 of this invention. Please note the gel content as provided in Table I. The impact modifiers D to G are prepared as mentioned above.

8

The gel content was determined by extraction of uncrosslinked EPDM/maleic anhydride adduct using chloroform for 14 days. The insoluble portion then was dried under vacuum at 60°C for two days. The residence time of this processing step was about 90 seconds at higher shear rate than Example 3.

## EXAMPLE 5

In this Example, impact modifier H was prepared using condition and composition of matter of Example 1, except that the residence time was reduced to 90 seconds at higher shear rate than Example 1.

## EXAMPLE 6

In this Example, the processing condition of Example 5 was used except that the concentration of peroxide was varied from 0 to 0.3 weight percent, but the concentration of maleic anhydride was kept constant. The impact modifiers of this Example are I, J and K of Table I.

## EXAMPLE 7

In this Example, the impact modifier was prepared by a seven barrel section in which zone 6 is the vent port and peroxide was added at zone 3. The residence time in this case was about 2 minutes. This impact modifier will be identified as "L".

## EXAMPLE 8

In this case, exact condition and composition of Example 5 impact modifier H was repeated to demonstrate the reproducibility of this process. This impact modifier will be identified as M.

Impact Modifiers N to AA were prepared under different RPM, output rate, temperature and therefore residence time in a co-rotating twin screw extruder.

Since activity of a free radical initiator depends on temperature and time of reaction, the gel content and percent adduct formation can be easily changed by processing conditions listed above. The screw design can also effect the above two important variables, temperature and time.

## EXAMPLE 9

Impact modifiers N to T were prepared at lower output rate and at higher residence time which effects the melt temperature of the resulting materials. These impact modifiers were prepared in a laboratory size ZSK-30 W/P (Werner Pfleiderer) twin screw extruder.

## EXAMPLE 10

Impact modifiers U to AA were prepared at higher output rate therefore at lower residence time but higher melt temperature of the resulted materials. These impact modifiers were prepared in laboratory size ZSK-30 W/P twin screw extruder.

## EXAMPLE 11

Impact modifier BB was prepared with a commercial processing equipment ZSK-90 W/P twin screw extruder under identical processing condition as impact modifier V was prepared.

## EXAMPLE 12

Impact modifier CC was prepared with a single screw extruder, under the identical processing condition as preparation of impact modifier V.

## EXAMPLE 13

The alloys of the above impact modifiers with nylon were prepared using twin screw extruder 34 mm -Leistritz at shear rates of 100 to 600 and processing temperature of 516°F to 540°F with 24.5/1, L/D and having a vacuum vent at zone 5. The resulting molten materials were then cooled and pelletized. The materials were injection molded using typical molding conditions for pure Nylon 66 with higher injection pressure than those of pure Nylon 66 materials. The mechanical properties are provided in Table III.

## EXAMPLE 14

The formulation 30 of Table III was prepared using ZSK-90 W/P twin screw extruder at shear rates of 300 to 600 with L/D equivalent to 27/1 and processing temperature of 516 to 540°F having a vacuum vent at zone 3. The resulting molten materials were then cooled and pelletized. The materials were injection molded using typical molding conditions for pure Nylon 66 with higher injection pressure than those of pure Nylon 66 materials.

## EXAMPLE 15

Table IV provides the Nylon 66/impact modifier BB concentration effect on the mechanical properties of the final product.

## EXAMPLE 16

Table V provides the differences of mechanical properties if the combination of Nylon 6 and Nylon 66 are mixed with these partially crosslinked EPDM-maleic anhydride adducts.

TABLE I

Preparation of Semi-Crosslinked EPDM-Maleic Anhydride Adduct[a]

| Impact Modifier | EPDM Wt. %* | Maleic Anydride Wt.% | Peroxide (phr) ** | Gel Content*** |
|---|---|---|---|---|
| D | 98.8 | 1.0 | 0.2 | 43.8 |
| E | 97.8 | 2.0 | 0.2 | 36.2 |
| F | 96.8 | 3.0 | 0.2 | 37.8 |
| G | 95.8 | 4.0 | 0.2 | 58.0 |
| H | 95.8 | 4.0 | 0.2 | 24.9 |
| I | 96 | 4.0 | – | <2.2 |
| J | 95.9 | 4.0 | 0.1 | 40.0 |
| K | 95.7 | 4.0 | 0.3 | 90.0 |
| L | 95.8 | 4.0 | 0.2 | 60.0 |
| M | 95.8 | 4.0 | 0.2 | 24.1 |

*EPDM (Vistalon-3708) is available from Exxon Chemical Company

**Dicumyl peroxide 20% concentrate PCL-20 supplied by Polyvel

***The gel content was determined by extraction of uncrosslinked EPDM maleic anhydride adduct portion from the impact modifiers using chloroform extraction for 14 days.

[a]The processing equipment was 34 mm Leistritz counter-rotating twin screw extruder.

EP 0 375 390 A1

TABLE II

Preparation of Semi-Crosslinked EPDM-Maleic Anhydride Adduct*

| Impact Modifier | EPDM Wt. % | Maleic Anydride Wt.% | Peroxide (phr) ** | Gel Content |
|---|---|---|---|---|
| N | 95.8 | 4.0 | 0.2 | 42.6 |
| O | 95.8 | 4.0 | 0.2 | 48.5 |
| P | 95.8 | 4.0 | 0.2 | 38.9 |
| Q | 95.8 | 4.0 | 0.2 | 28.0 |
| R | 95.8 | 4.0 | 0.2 | 36.6 |
| S | 95.8 | 4.0 | 0.2 | 48.9 |
| T | 95.8 | 4.0 | 0.2 | 28.7 |
| U | 95.8 | 4.0 | 0.2 | 29.0 |
| V | 95.8 | 4.0 | 0.2 | 13.4 |
| W | 95.8 | 4.0 | 0.2 | 17.7 |
| X | 95.8 | 4.0 | 0.2 | 29.8 |
| Y | 95.8 | 4.0 | 0.2 | 38.0 |
| Z | 95.8 | 4.0 | 0.2 | 32.8 |

*Prepared using ZSK-30 W/P equipment which is a co-rotating twin screw extruder.

**Dicumyl peroxide 20% concentrate PCL-20 supplied by Polyvel

TABLE II (continued)

Preparation of Semi-Crosslinked EPDM-Maleic Anhydride Adduct

| Impact Modifier | EPDM Wt. % | Maleic Anydride Wt.% | Peroxide (phr) | Gel Content |
|---|---|---|---|---|
| AA* | 95.8 | 4.0 | 0.2 | 15.6 |
| BB** | 95.96 | 4.0 | 0.04*** | 10.0 |
| C**** | 95.96 | 4.0 | 0.04*** | 12.8 |

*Prepared using ZSK-30 W/P equipment which is a co-rotating twin screw extruder.

**Prepared using ZSK-90 W/P equipment which is a co-rotating twin screw extruder.

***Pure dicumyl peroxide was used instead of 20% dicumyl peroxide concentrate (e.g., PCL-20 Polyvel)

****Prepared using single screw extruder.

## TABLE III

|                                      | 1     | 2     | 3     | 4     | 5     | 6     |
|--------------------------------------|-------|-------|-------|-------|-------|-------|
| Nylon 66                             | 77.6  | 77.6  | 77.6  | 77.6  | 77.6  | 77.6  |
| Impact Modifier (Type)               | A     | B     | C     | D     | E     | F     |
| Wt.% of Modifier                     | 22.4  | 22.4  | 22.4  | 22.4  | 22.4  | 22.4  |
| Tensile Strength (psi)               | 6706  | 6413  | 6541  | 6803  | 6800  | 6853  |
| Elongation to yield (%)              | 9     | 10    | 9     | 8.1   | 8.4   | 8.3   |
| Elongation to Break (%)              | 81    | 71    | 82    | 40    | 41    | 44    |
| Flexural Strength (psi)              | 10846 | 10758 | 10752 | 10992 | 11155 | 11330 |
| Flexural Modulus (ksi)               | 286   | 287   | 283   | 284   | 289   | 286   |
| Notched Izod Impact (1/8")           |       |       |       |       |       |       |
| - at 73°F (ft.lb./in)                | N.B.  | 3.4   | N.B.  | 3.8   | 3.5   | 3.2   |
| - at -40°F (ft.lb./in.)              | 3.17  |       | 3.22  |       |       |       |
| Gardner Impact (in.lb.)              | >320  | 312   | 319   | 306   | >320  | >320  |
| Heat Deflection Temperature          |       |       |       |       |       |       |
| - at 264 psi (°C)                    | 59    | 57    | 58    | 67    | 69    | 68    |

EP 0 375 390 A1

TABLE III (continued)

| | 7 | 8 | 9 | 10 | 11 | 12 |
|---|---|---|---|---|---|---|
| Nylon 66 | 77.6 | 77.6 | 77.6 | 77.6 | 77.6 | 77.6 |
| Impact Modifier (Type) | G | H | I | J | K | L |
| Wt.% of Impact Modifier | 22.4 | 22.4 | 22.4 | 22.4 | 22.4 | 22.4 |
| Tensile Strength (psi) | 7122 | 6737 | 6574 | 6627 | 6572 | 6510 |
| Elongation to yield (%) | 7.8 | 8.6 | 8.1 | 8.4 | 9.8 | 10.6 |
| Elongation to Break (%) | 38 | 39 | 59 | 45 | 37 | 45 |
| Flexural Strength (psi) | 11418 | 11007 | 11251 | 10945 | 10913 | 10520 |
| Flexural Modulus (ksi) | 283 | 267 | 278 | 259 | 264 | 269 |
| Notched Izod Impact (1/8") | | | | | | |
| - at 73°F (ft.lb./in) | 13.6 | 11.9 | 3.6 | 15.5 | 7.6 | 10.6 |
| - at -40°F (ft.lb./in.) | 2.3 | 3.3 | | 4.2 | | 3.2 |
| Gardner Impact (in.lb.) | 312 | 277 | >320 | >320 | 242 | 172 |
| Heat Deflection Temperature | | | | | | |
| - at 264 psi (°C) | 69 | 67 | 69 | 70 | 70 | 59 |

TABLE III (continued)

|                              | 13    | 14    | 15    | 16    | 17    | 18    |
|------------------------------|-------|-------|-------|-------|-------|-------|
| Nylon 6                      | 77.6  | 77.6  | 77.6  | 77.6  | 77.6  | 77.6  |
| Impact Modifier (Type)       | M     | N     | O     | P     | Q     | R     |
| Wt.% of Impact Modifier      | 22.4  | 22.4  | 22.4  | 22.4  | 22.4  | 22.4  |
| Tensile Strength (psi)       | 6410  | 6500  | 6480  | 6570  | 6660  | 6470  |
| Elongation to yield (%)      | 8.8   | 8.7   | 8.9   | 8.5   | 8.5   | 8.9   |
| Elongation to Break (%)      | 82    | 72    | 72    | 69    | 78    | 79    |
| Flexural Strength (psi)      | 10490 | 10700 | 10680 | 10790 | 11120 | 10310 |
| Flexural Modulus (ksi)       | 261   | 267   | 267   | 267   | 269   | 260   |
| Notched Izod Impact (1/8")   |       |       |       |       |       |       |
| – at 73°F (ft.lb./in)        | 18.0  | 18.5  | 17.3  | 17.4  | 17.6  | 17.1  |
| – at –40°F (ft.lb./in.)      | 4.5   | 4.2   | 3.6   | 4.1   | 3.9   | 4.2   |
| Gardner Impact (in./lb.)     | >320  | >320  | >320  | >320  | >320  | >320  |
| Heat Deflection Temperature  |       |       |       |       |       |       |
| – at 264 psi (°C)            | 59    | 61    | 61    | 62    | 62    | 61    |

EP 0 375 390 A1

EP 0 375 390 A1

TABLE III (continued)

| | 19 | 20 | 21 | 22 | 23 | 24 |
|---|---|---|---|---|---|---|
| Nylon 66 | 77.6 | 77.6 | 77.6 | 77.6 | 77.6 | 77.6 |
| Impact Modifier (Type) | S | T | U | V | W | X |
| Wt.% of Impact Modifier | 22.4 | 22.4 | 22.4 | 22.4 | 22.4 | 22.4 |
| Tensile Strength (psi) | 6540 | 6730 | 6500 | 6400 | 6700 | 6600 |
| longation to yield (%) | 8.6 | 8.8 | 9.8 | 10 | 9.2 | 10 |
| Elongation to Break (%) | 70 | 74 | 106 | 93 | 82 | 95 |
| Flexural Strength (psi) | 10560 | 10870 | 10300 | 10600 | 10600 | 10200 |
| Flexural Modulus (ksi) | 268 | 275 | 249 | · 257 | 259 | 248 |
| Notched Izod Impact (1/8") | | | | | | |
| - at 73°F (ft.lb./in) | 15.4 | 17.7 | 20.1 | 19.1 | 18.0 | 19.5 |
| - at -40°F (ft.lb./in.) | 3.9 | 4.4 | 4.1 | 4.5 | 3.3 | 4.7 |
| Gardner Impact (in.lb.) | ›320 | ›320 | ›320 | ›320 | ›320 | ›320 |
| Heat Deflection Temperature | | | | | | |
| - at 264 psi (°C) | 63 | 63 | 60 | 58 | 59 | 57 |

TABLE III (continued)

|  | 25 | 26 | 27 | 28a | 29a | 30b |
|---|---|---|---|---|---|---|
| Nylon 66 | 77.6 | 77.6 | 77.6 | 77.6 | 77.6 | 77.6 |
| Impact Modifier (Type) | Y | Z | AA | BB | CC | BB |
| Wt.% of Impact Modifier | 22.4 | 22.4 | 22.4 | 22.4 | 22.4 | 22.4 |
| Tensile Strength (psi) | 6300 | 6200 | 6300 | 6720 | 6680 | 6500 |
| Elongation to yield (%) | 11 | 9 | 9 | 8.4 | 8.2 | 7.7 |
| Elongation to Break (%) | 112 | 127 | 119 | 56 | 65 | 113 |
| Flexural Strength (psi) | 10200 | 9900 | 10100 | 10820 | 11090 | 9990 |
| Flexural Modulus (ksi) | 243 | 243 | 254 | 261 | 254 | 258 |
| Notched Izod Impact (1/8") | | | | | | |
| - at 73°F (ft.lb./in) | 19.8 | 20.0 | 20.1 | 18.6 | 17.4 | 19.1 |
| - at -40°F (ft.lb./in.) | 4.7 | 5.0 | 4.9 | 4.7 | 3.6 | 4.5 |
| Gardner Impact (in.lb.) | ›320 | ›320 | ›320 | ›320 | ›320 | ›320 |
| Heat Deflection Temperature | | | | | | |
| - at 264 psi (°C) | 57 | 58 | 58 | 66 | 66 | 52 |

a. Prepared by mixing BB with Nylon 66 using Leistritz twin screw extruder.
b. Prepared by mixing BB with Nylon 66 using 90 mm ZSK W/P twin screw extruder.

EP 0 375 390 A1

## TABLE IV

| | 1 | 2 | 3 | 4 | 5 | 6 |
|---|---|---|---|---|---|---|
| Nylon 66 (Zytel-101)(%) | 95.00 | 90.00 | 85.00 | 80.00 | 75.00 | 70.00 |
| Impact Modifier BB(%) | 5.00 | 10.00 | 15.00 | 20.00 | 25.00 | 30.00 |
| Melt Index (g/10 min.) 275$^{O}$C/10000g | 327.6 | 260.4 | 171.6 | 120.8 | 66.0 | 16.8 |
| **Tensile** | | | | | | |
| Yield Strength (psi) | 10700 | 9400 | 8000 | 7000 | 6000 | 5200 |
| Yield Strain (%) | 9.0 | 8.6 | 8.5 | 8.1 | 7.9 | 8.6 |
| Break Strain (%) | 36 | 39 | 49 | 60 | 104 | 177 |
| **Flexural** | | | | | | |
| Strength (psi) | 17100 | 15200 | 13100 | 11800 | 10100 | 8700 |
| Modululus (10 5 psi) | 4.17 | 3.79 | 3.30 | 2.92 | 2.54 | 2.15 |
| **IZOD Impact** | | | | | | |
| Notched 1/8" (ft.lb/in) | 1.8C | 2.5C | 4.5C | 13.9NB | 19.1NB | NB |
| Notched 1/8" -40$^{O}$C | 1.7C | 2.4C | 3.4C | 4.0C | 8.1C | NB |
| Gardner Impact (in.lb.) | ›320 | ›320 | ›320 | ›320 | ›320 | ›320 |
| Gardner Impact -40$^{O}$C | 78±106 | 302±40 | ›320 | ›320 | ›320 | ›320 |
| **Deflection Temp.** | | | | | | |
| 264 psi ($^{O}$C) | 76 | 72 | 68 | 68 | 64 | 63 |
| 66 psi ($^{O}$C) | 226±3 | 222 | 203±3 | 199±9 | 166±33 | 103±4 |
| Brittleness Temp. ($^{O}$C) | ‹-40 | ‹-40 | ‹-40 | ‹-40 | ‹-40 | ‹-40 |

TABLE IV (Continued)

| | 7 | 8 | 9 | 10 | 11 | 12 |
|---|---|---|---|---|---|---|
| Nylon 66 (Zytel-101)(%) | 60.00 | 50.00 | 40.00 | 30.00 | 20.00 | 82.40 |
| Impact Modifier BB(%) | 40.00 | 50.00 | 60.00 | 70.00 | 80.00 | 17.60 |
| Melt Index (g/10 min.) 275°C/10,000g | 2.9 | 2.0 | 7.2 | 2.0 | 0.02 | 48.0 |
| Tensile | | | | | | |
| Yield Strength (psi) | 3900 | 2700 | 1500 | 860 | 560 | 7700 |
| Yield Strain (%) | 11.8 | 21.9 | 89.6 | 83.6 | 101.6 | 8.3 |
| Break Strain (%) | 219 | 180 | 100 | 110 | 185 | 50 |
| Flexural | | | | | | |
| Strength (psi) | 6300 | 3800 | 1200 | 520 | 230 | 12200 |
| Modululus (10 5 psi) | 1.61 | 0.99 | 0.28 | 0.10 | 0.02 | 3.11 |
| IZOD Impact | | | | | | |
| Notched 1/8" (ft.lb/in) | NB | NB | NB | NB | NB | 9.3C |
| Notched 1/8" -40°C | NB | NB | NB | NB | NB | 4.1C |
| Gardner Impact (in.lb.) | >320 | 314+2 | 109+65 | 37+15 | 132+6 | 291+56 |
| Gardner Impact -40°C | >320 | 274+14 | 176+12 | 41+7 | 71+7 | >320 |
| Deflection Temp. | | | | | | |
| 264 psi (°C) | 57 | 54 | * | * | * | 70 |
| 66 psi (°C) | 82+3 | 61 | 47 | * | * | 205 |
| Brittleness Temp. (°C) | <-40 | <-40 | <-40 | <-40 | — | <-40 |

* Could not test.

EP 0 375 390 A1

**TABLE V**

| | 1 | 2 | 3 |
|---|---|---|---|
| Nylon 6 | 24.4 | 24.4 | 24.4 |
| Nylon 66 | 53.2 | 53.2 | 53.2 |
| Impact Modifier (Type) | A | B | C |
| Wt.% of Impact Modifier | 22.4 | 22.4 | 22.4 |
| Tensile Strength (psi) | 6836 | 6731 | 6693 |
| Elongation to yield (%) | 7 | 7 | 8 |
| Elongation to Break (%) | 43 | 44 | 42 |
| Flexural Strength (psi) | 10664 | 10456 | 10543 |
| Flexural Modulus (ksi) | 283 | 269 | 277 |
| Notched Izod Impact (1/8") | | | |
| – at 73°F (ft.lb./in) | NB | NB | NB |
| – at -40°F (ft.lb./in.) | 3.25 | 2.5 | 3.24 |
| Gardner Impact (in.lb.) | 319 | 254 | 319 |
| Heat Deflection Temperature | | | |
| – at 264 psi (°C) | 53 | 50 | 51 |

## Claims

1. A multiphase polymer composition, comprising;
at least one polyamide resin; and
at least one partially crosslinked elastomeric modifier having reactive functionalities reactive with said polyamide, and wherein said elastomeric modifier has a gel content of at least 10 percent.

2. A polymer composition according to Claim 1, wherein said gel content of said elastomeric modifier is from about 10 percent to about 90 percent, and wherein the amount of said elastomeric modifier having reactive functionalities is from about 1 percent to about 85 percent by weight based upon the total weight of said elastomeric modifier and said polyamide resin.

3. A polymer composition according to Claim 2, wherein the weight average particle size of said elastomeric modifier having reactive functionalities is from about 1.3 to about 50 microns.

4. The polymer composition according to Claim 3, wherein the amount of elastomeric modifier is from about 5 percent to about 55 percent by weight, and wherein said polyamide resin constitutes a continuous phase and said elastomeric modifier is a discontinuous phase.

5. The polymer composition according to Claim 4, wherein said elastomeric modifier has a particle size of from about 5 to about 25 microns.

6. The polymer composition according to Claim 5, wherein said elastomeric modifier has a gel content of from about 20 percent to about 40 percent.

7. The polymer composition according to Claim 6, wherein the amount of said elastomeric modifier is from about 15 percent to about 50 percent by weight, wherein said polyamide is produced by the reaction of at least one dicarboxylic acid and at least diamine, and wherein at least one dicarboxylic acid is selected from the group consisting of adipic acid, sebacic acid, azelaic acid, dodecanoic acid, and mixtures thereof, and said diamine is selected from hexamethylene diamine or tetramethylene diamine.

8. The polymer composition according to Claim 7, wherein said elastomeric modifier is EPDM, random or multiblock SBR, polybutadiene, polyisoprene, nitrile rubber, or combinations thereof, and wherein said reactive functionalities are maleic anhydride, maleic acid, fumaric acid, acrylic acid, methacrylic acid, glycidyl methacrylate, and combinations thereof, wherein said dicarboxylic acid is adipic acid and said diamine is hexamethylene diamine.

9. The polymer composition according to Claim 7, wherein said polyamide is produced by ring opening polymerization of a 5- or 6-member ring of a ring containing reactant.

10. The polymer composition according to Claim 1, wherein said composition has a notched Izod value of at least 2 ft-lbs/inch at 23° C.

11. The polymer composition according to Claim 4, wherein said composition has a notched Izod value of at least 4 ft-lbs/inch at 23° C.

12. The polymer composition according to Claim 8, wherein said composition has a notched Izod value of at least 9 ft-lbs/inch at 23° C.

13. A multiphase polymer composition, comprising:
a continuous phase containing at least one polyamide resin; and
a discontinuous phase containing at least one partially crosslinked elastomeric modifier having reactive functions bonded to said polyamide, the composition having a heat deflection temperature of from about 50° C to about 75° C at 264 psi.

14. A multiphase polymer composition according to Claim 13, wherein said elastomeric modifier has a gel content of from about 10 percent to about 90 percent, and wherein the particle size of said elastomeric modifier in said composition is from about 1.3 to about 50 microns.

15. A multiphase polymer composition according to Claim 14, wherein the amount of said polyamide is from about 15 percent to about 99 percent by weight, and wherein the amount of said elastomeric modifier is from about 1 percent to about 85 percent by weight, said weights based upon a total weight of said elastomeric modifier and said polyamide resin, and wherein the weight average particle size of said elastomeric modifier in said composition is from about 3.5 to about 35 microns.

16. A multiphase polymer composition according to Claim 15, wherein said gel content of said elastomeric modifier is from about 20 percent to about 40 percent by weight, wherein said polyamide is produced by the reaction of at least one dicarboxylic acid and at least diamine, and wherein at least one dicarboxylic acid is selected from the group consisting of adipic acid, sebacic acid, azelaic acid, dodecanoic acid, and mixtures thereof, and said diamine is selected from hexamethylene diamine and tetramethylene diamine.

17. A multiphase polymer composition according to Claim 16, wherein said elastomeric modifier is EPDM, random or multiblock SBR, polybutadiene, polyisoprene, nitrile rubber, or combinations thereof, and wherein said reactive functionalities are maleic anhydride, maleic acid, fumaric acid, acrylic acid, methacrylic acid, glycidyl methacrylate, and combinations thereof, wherein said dicarboxylic acid is adipic acid and said diamine is hexamethylene diamine, and wherein said composition has a notched Izod value of at least 2 ft-lbs/inch at 23° C.

18. A multiphase polymer composition according to Claim 14, wherein said composition has a heat deflection value of from about 60° C to about 70° C.

19. A multiphase polymer composition according to Claim 17, wherein said composition has a heat deflection value of from about 60° C to about 70° C.

20. A multiphase polymer composition, comprising:
a continuous phase having at least one polyamide resin therein, a discontinuous phase having at least one partially crosslinked elastomeric modifier having reactive functional groups bonded to said polyamide, and said discontinous phase having small polyamide particles therein, said discontinuous phase having a weight average particle size of at least 3.5 microns and said polyamide particles contained in said discontinuous phase having a particle size of 2 microns or less.

21. A multiphase polymer composition according to Claim 20, wherein said elastomeric modifier has a gel content of from about 10 percent to about 90 percent, and wherein the total amount of said polyamide is from about 15 percent to about 99 percent and wherein the amount of said elastomeric modifier is from about 1 percent to about 85 percent by weight, said weights being based upon the total weight of said elastomeric modifier and said polyamide.

22. A multiphase polymer composition according to Claim 21, wherein the amount of said elastomeric modifier is from about 5 percent to about 55 percent by weight and wherein the amount of said polyamide is from about 45 percent to about 95 percent by weight.

23. A multiphase polymer composition according to Claim 22, wherein the gel content of said elastomeric modifier is from about 20 percent to about 40 percent.

24. A multiphase polymer composition according to Claim 23, wherein said polyamide is produced by the reaction of at least one dicarboxylic acid and at least diamine, and wherein at least one dicarboxylic acid is selected from the group consisting of adipic acid, sebacic acid, azelaic acid, dodecanoic acid, and mixtures thereof, and said diamine is selected from hexamethylene diamine and tetramethylene diamine.

25. A multiphase polymer composition according to Claim 24, wherein said elastomeric modifier is EPDM, random or multiblock SBR, polybutadiene, polyisoprene, nitrile rubber, or combinations thereof, and wherein said reactive functionalities are maleic anhydride, maleic acid, fumaric acid, acrylic acid, methacrylic acid, glycidyl methacrylate, and combinations thereof, wherein said dicarboxylic acid is adipic acid and said diamine is hexamethylene diamine, and wherein said composition has a notched Izod value of at least 4 ft-lbs/inch at 23°C.

26. A multiphase polymer composition according to Claim 23, wherein the particle size of said discontinuous phase is from about 5 microns to about 25 microns and wherein said small polyamide particles located in said discontinuous phase is 1 micron or less.

## DOCUMENTS CONSIDERED TO BE RELEVANT

| Category | Citation of document with indication, where appropriate, of relevant passages | Relevant to claim | CLASSIFICATION OF THE APPLICATION (Int. Cl⁵) |
|---|---|---|---|
| X | EP - A2 - 0 275 186 (JAPAN SYNTHETIC RUBBER CO., LTD.) <br> * Claims; page 22, table 4 * | 1-17, 20-26 | C 08 L 77/00 <br> C 08 L 51/04 |
| A | US - A - 4 474 927 (NOVAK) <br> * Claims; column 2, lines 4-16; table * | 1,10-13 | |
| A | EP - A2 - 0 212 510 (BASF AKTIENGESELLSCHAFT) <br> * Claims * | 1-4, 13,14 | |

| TECHNICAL FIELDS SEARCHED (Int. Cl⁵) |
|---|
| C 08 L 77/00 <br> C 08 L 51/00 |

The present search report has been drawn up for all claims

| Place of search | Date of completion of the search | Examiner |
|---|---|---|
| VIENNA | 21-03-1990 | WEIGERSTORFER |